# FASCICULE DE BREVET EUROPEEN

(11) **EP 2 877 315 B1**
(45) Date de publication et mention de la délivrance du brevet: **04.03.2020**
(21) Numéro de dépôt: 13742620.1
(22) Date de dépôt: 26.07.2013
(51) Int. Cl.: B29C 64/135, B29C 64/141, B29C 64/153, B29C 64/386, B33Y 10/00, B33Y 30/00, B22F 3/105, B23K 26/082, B23K 26/08, B23K 26/34

(54) **DISPOSITIF DE FABRICATION D'OBJETS TRIDIMENSIONNELS PAR COUCHES SUPERPOSÉES ET PROCÉDÉ DE FABRICATION ASSOCIÉ**
VORRICHTUNG ZUR SCHICHTWEISEN HERSTELLUNG DREIDIMENSIONALER OBJEKTE UND HERSTELLUNGSVERFAHREN
DEVICE FOR MANUFACTURING THREE-DIMENSIONAL OBJECTS LAYER BY LAYER AND METHOD OF MANUFACTURING

(30) Priorité: 27.07.2012 FR 1257327
(43) Date de publication de la demande: 03.06.2015
(73) Titulaire: Phenix Systems, 63200 Riom (FR)
(72) Inventeur: TEULET, Patrick, F-63200 Riom (FR)
(74) Mandataire: Lavoix
(86) Numéro de dépôt international: PCT/EP2013/065783
(87) Numéro de publication internationale: WO 2014/016402

(56) Documents cités:
- WO-A2-02/36331
- WO-A2-2005/037478
- DE-C1- 19 935 274

## Description

La présente invention concerne un dispositif de fabrication d'objets tridimensionnels par couches superposées, apte à appliquer, pour chaque couche à fabriquer, une solidification par faisceau laser d'une couche d'un matériau pulvérulent ou liquide placé dans un champ de frittage et un procédé de fabrication associé.

L'invention se situe dans le domaine technique de la réalisation d'objets tridimensionnels par traitement laser, en particulier par frittage laser.

Il est connu de réaliser des objets tridimensionnels de forme quelconque par fabrication additive couche par couche par frittage laser. Un tel procédé de fabrication comprend le dépôt d'une couche de matériau pulvérulent ou liquide sur un substrat, qui peut être une couche précédemment solidifiée de l'objet à fabriquer. La couche de matériau pulvérulent ou liquide est solidifiée progressivement par application d'un faisceau laser, appelée également lasage, selon une zone définie par une section bidimensionnelle de l'objet à fabriquer. Ainsi, un objet tridimensionnel est fabriqué par superposition de couches, chaque couche correspondant à une section bidimensionnelle de l'objet à fabriquer.

De manière connue, une installation de fabrication par traitement laser par couches superposées comporte une source de rayonnement électromagnétique ou source laser apte à émettre un faisceau laser, une tête galvanométrique, apte à mettre en forme le faisceau laser issu de la source laser et à le piloter dans un champ de frittage, qui est situé dans un plan XY et sur lequel est positionnée la couche de matériau liquide ou pulvérulent à solidifier par le laser.

La tête galvanométrique comporte notamment des moyens de mise en forme du faisceau laser et des moyens de déviation du faisceau laser dans le plan de frittage, pilotés par une unité centrale afin de tracer diverses trajectoires dans le champ de frittage, permettant ainsi de façonner une section bidimensionnelle de forme quelconque de l'objet à fabriquer.

La tête galvanométrique comporte également un dispositif permettant de focaliser le faisceau laser dans le plan de frittage, qui peut être, par exemple, une lentille à champ plat placée en aval des moyens de déviation du faisceau et/ou un dispositif opérant une modification de la distance focale placé en amont des moyens de déviation de faisceau.

Le document WO02/36331 A2 décrit un dispositif de fabrication par traitement laser par couches superposées selon le préambule de la revendication 1.

Classiquement, les moyens de déviation de faisceau comportent par exemple des miroirs montés sur des moteurs galvanométriques, par exemple deux miroirs dont les axes sont perpendiculaires. Le débattement angulaire des miroirs étant borné, la zone maximale de frittage du champ de frittage est également limitée, pour une distance donnée entre la tête galvanométrique et le champ de frittage. La taille de la zone maximale de frittage dépend en plus du type de dispositif permettant de focaliser le faisceau laser dans le champ de frittage, elle est plus restreinte dans le cas d'une lentille à champ plat. Il s'agit là d'une première limitation des installations connues de fabrication par traitement laser par couches superposées.

De plus, il a été constaté que le coefficient de réflexion sur les miroirs varie selon l'angle d'incidence du faisceau laser. Pour un angle d'incidence inférieur à 45°, 99% de l'onde électromagnétique est réfléchie, alors qu'au-delà de cette valeur angulaire, une onde polarisée dans le plan d'incidence est atténuée de façon significative. Ainsi, il y a une forte variation de l'intensité réfléchie entre le centre de la zone maximale de frittage et les bords de la zone maximale de frittage.

Par ailleurs, il a également été constaté qu'un faisceau circulaire au centre de la zone maximale de frittage, donc à angle d'incidence nul, prend une forme elliptique sur les bords de la zone maximale de frittage. On appelle ce phénomène « ovalisation » du faisceau intercepté sur les bords de la zone maximale de frittage. La variation de la surface du faisceau intercepté sur le champ de frittage entraîne une variation de l'intensité d'irradiation électromagnétique. Ainsi, le traitement par faisceau laser n'est pas homogène entre le centre de la zone maximale de frittage et sur ses bords.

Dans le cas où le dispositif permettant de focaliser le faisceau laser dans le champ de frittage est une lentille à champ plat, il a également été constaté une variation du rayon du faisceau intercepté sur le champ de frittage en fonction de sa position dans le champ de frittage, ce qui entraîne une variation de la surface irradiée et donc de l'intensité d'irradiation électromagnétique.

Ainsi, il apparaît que les installations de fabrication par traitement laser par couches superposées connues ne permettent pas un traitement homogène d'une couche sur l'ensemble de la zone maximale de frittage possible, qui est par ailleurs limitée en taille.

Il existe donc un besoin d'améliorer la qualité et la capacité de traitement par frittage de telles installations.

A cet effet, l'invention propose un dispositif de fabrication d'objets tridimensionnels par couches superposées selon la revendication 1.

Avantageusement, la zone globale de frittage qui est la somme des zones effectives de frittage, est étendue, tout en assurant un traitement homogène dans la mesure où chacune des zones effectives de frittage est contenue à l'intérieur de la zone maximale de frittage.

Le dispositif de fabrication par couches superposées d'objets tridimensionnels peut également présenter une ou plusieurs des caractéristiques ci-dessous :
- une dite zone effective de frittage est centrée dans ladite zone maximale de frittage, autour d'un point correspondant à une incidence normale dudit faisceau laser sur le champ de frittage ;
- il comporte en outre des moyens de déviation dudit faisceau laser et un dispositif apte à focaliser ledit faisceau laser dans le champ de frittage placé en amont desdits moyens de déviation, et ladite zone effective de frittage est décentrée par rapport à ladite zone maximale de frittage ;
- ladite zone globale de frittage est une section bidimensionnelle d'un objet tridimensionnel à fabriquer ;

Selon un deuxième aspect, l'invention concerne un procédé de fabrication d'objets tridimensionnels par couches superposées selon la revendication 5..

Le procédé de fabrication d'objets tridimensionnels par couches superposées a des avantages analogues aux avantages du dispositif de fabrication d'objets tridimensionnels par couches superposées selon l'invention.

Selon une caractéristique, dans l'étape de détermination d'une pluralité de zones effectives de frittage, un positionnement de chaque zone effective de frittage prend en compte un positionnement de zones effectives de frittage déterminées pour une couche précédent ladite couche courante.

Selon un troisième aspect, l'invention concerne une installation de fabrication d'objets tridimensionnels par couches superposées comportant au moins deux dispositifs de fabrication d'objets tridimensionnels par couches superposées tels que brièvement décrits ci-dessus, lesdits dispositifs étant chacun apte à piloter un faisceau laser issu d'une source de rayonnement électromagnétique associée audit dispositif, vers un champ de frittage commun.

D'autres caractéristiques et avantages de l'invention ressortiront de la description qui en est donnée ci-dessous, à titre indicatif et nullement limitatif, en référence aux figures annexées, parmi lesquelles :
- la figure 1 représente schématiquement une installation de fabrication d'objets tridimensionnels par frittage laser par couches ;
- la figure 2 est un bloc diagramme d'un dispositif de fabrication d'objets tridimensionnels par frittage laser par couches selon l'invention ;
- la figure 3 représente une zone effective de frittage selon un mode de réalisation de l'invention ;
- la figure 4 représente une partition d'une zone globale de frittage en zones effectives de frittage selon un premier mode de réalisation de l'invention ;
- la figure 5 représente une zone globale de frittage composée de plusieurs zones effectives de frittage selon un deuxième mode de réalisation de l'invention ;
- la figure 6 représente une zone effective de frittage selon un autre mode de réalisation de l'invention ;
- la figure 7 représente la couverture d'une section bidimensionnelle d'un objet tridimensionnel à fabriquer ;
- la figure 8 représente la trajectoire de la tête galvanométrique entre plusieurs zones effectives de frittage selon un mode de réalisation de l'invention ;
- la figure 9 représente schématiquement le positionnement de la tête galvanométrique par couches successives;
- la figure 10 représente schématiquement des sections bidimensionnelles d'une couche à solidifier, traitées respectivement par faisceaux laser provenant de deux sources différentes ;
- la figure 11 représente en détail un exemple de trajectoires de faisceau laser entre deux zones effectives de frittage ;
- la figure 12 représente une zone effective de frittage commune à deux têtes galvanométriques, et
- la figure 13 est un organigramme d'un procédé de fabrication d'objets tridimensionnels par frittage laser par couches selon un mode de réalisation de l'invention.

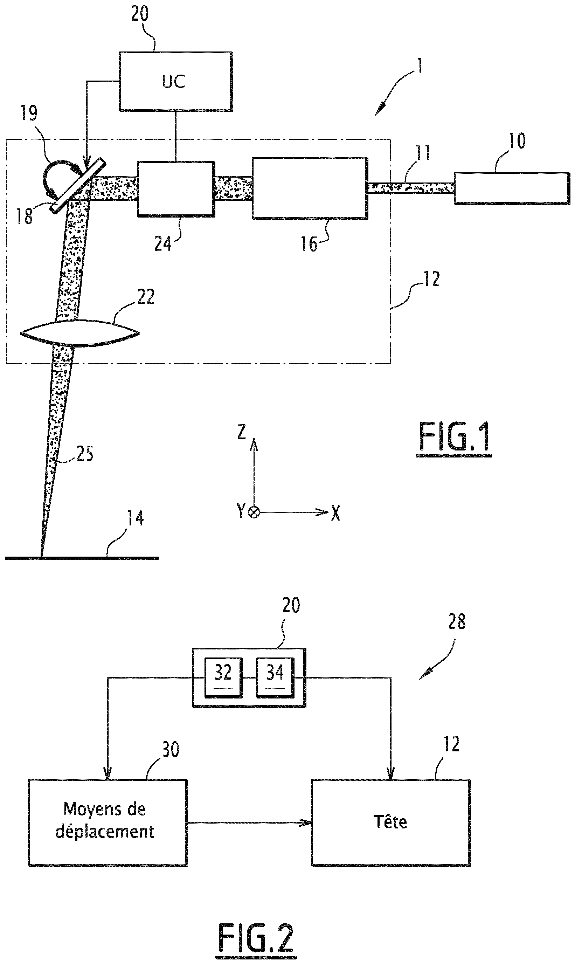

La figure 1 représente une installation 1 de fabrication par traitement laser de couches superposées. L'installation 1 comporte une source de rayonnement électromagnétique ou source laser 10 apte à émettre un faisceau laser 11, une tête galvanométrique 12, apte à mettre en forme le faisceau laser 11 issu de la source laser 10 et à le piloter dans un champ de frittage 14, qui est situé dans un plan XY de l'espace, dont un repère orthogonal XYZ est représenté sur la figure, et sur lequel est positionnée la couche de matériau liquide ou pulvérulent à solidifier par le laser.

La tête galvanométrique 12 comporte notamment des moyens 16 de mise en forme du faisceau laser 11 et des moyens 18 de déviation du faisceau laser dans le champ de frittage 14. Les moyens 18 de déviation du faisceau laser sont pilotés par une unité centrale 20 afin de tracer diverses trajectoires dans le champ de frittage 14, permettant ainsi de solidifier progressivement une section tridimensionnelle de forme quelconque d'un objet à fabriquer.

Les moyens 18 de déviation du faisceau comportent, dans un mode de réalisation, deux miroirs montés sur des moteurs galvanométriques, dont les axes sont perpendiculaires. Sur la figure 1 seul un miroir est représenté, et un moteur galvanométrique est schématisé par une flèche illustrant la mise en mouvement du miroir.

La tête galvanométrique 12 comporte également un dispositif permettant de focaliser le faisceau laser dans le champ de frittage 14, qui est, selon un premier mode de réalisation, une lentille 22 à champ plat, connue sous le nom de lentille F-Thêta, placée en aval des moyens 18 de déviation de faisceau.

Selon un deuxième mode de réalisation, le dispositif permettant de focaliser le faisceau laser dans le champ de frittage 14 est un dispositif 24 dit dispositif « troisième axe », opérant une modification de la distance focale, placé en amont des moyens 18 de déviation de faisceau. Dans un mode de réalisation, le dispositif 24 est une lentille motorisée selon l'axe du faisceau 11. En variante, le dispositif 24 est une lentille à focale variable. L'unité centrale 20 est également apte à piloter le dispositif 24 afin de régler la distance focale.

Selon un troisième mode de réalisation, le dispositif permettant de focaliser le faisceau laser dans le champ de frittage 14 est composé d'une combinaison d'un dispositif de type « troisième axe » et d'une lentille de focalisation à champ plat.

Le faisceau 25 issu de la tête galvanométrique 12 intersecte le champ de frittage 14. Les limites physiques de déplacement du faisceau 25 dans le champ de frittage, en particulier dues au débattement angulaire des miroirs formant les moyens de déviation 18 définissent une zone maximale de frittage dans le champ de frittage. Par exemple, pour un débattement angulaire des miroirs borné à +/- 20 degrés, et une distance séparant le dernier dioptre de la tête galvanométrique du champ de frittage de 500mm, dite distance de travail, la zone maximale de frittage est un carré de côté de 290mm dans le premier mode de réalisation avec lentille 22 à champ plat et de 418mm pour le deuxième mode de réalisation avec un dispositif 24 de type « troisième axe ».

La tête galvanométrique 12 et la source d'énergie électromagnétique laser 10 forment une chaîne optique de traitement.

Un dispositif 28 de fabrication d'objets par frittage laser par couches, illustré schématiquement à la figure 2, comporte, en plus des éléments décrits ci-dessus en référence à la figure 1, des moyens 30 de déplacement en translation de la tête galvanométrique dans un plan parallèle au plan du champ de frittage, permettant de positionner ladite tête galvanométrique en au moins deux positions différentes et d'agrandir potentiellement la zone globale de frittage sur laquelle un traitement laser peut être effectué. Les moyens 30 sont mis en œuvre par tout type de moyen mécanique connu. Les systèmes mis en œuvre pour ces mouvements sont par exemple des systèmes mécaniques vis-écrous à bille de précisions et animés par des moteurs de type « brushless » ou des moteurs linéaires, le tout étant positionné et guidé par des rails et des patins à billes de précision.

Ainsi, une zone globale de frittage de taille quelconque, par exemple de 1000x2000 mm, est atteignable.

L'unité centrale 20 comporte des moyens 32, par exemple mis en œuvre par un module logiciel, aptes à fournir des commandes de pilotage des moyens 30 de déplacement de la tête galvanométrique et donc de positionner la tête galvanométrique à un endroit spatial prédéterminé dans un plan parallèle au plan du champ de frittage 14.

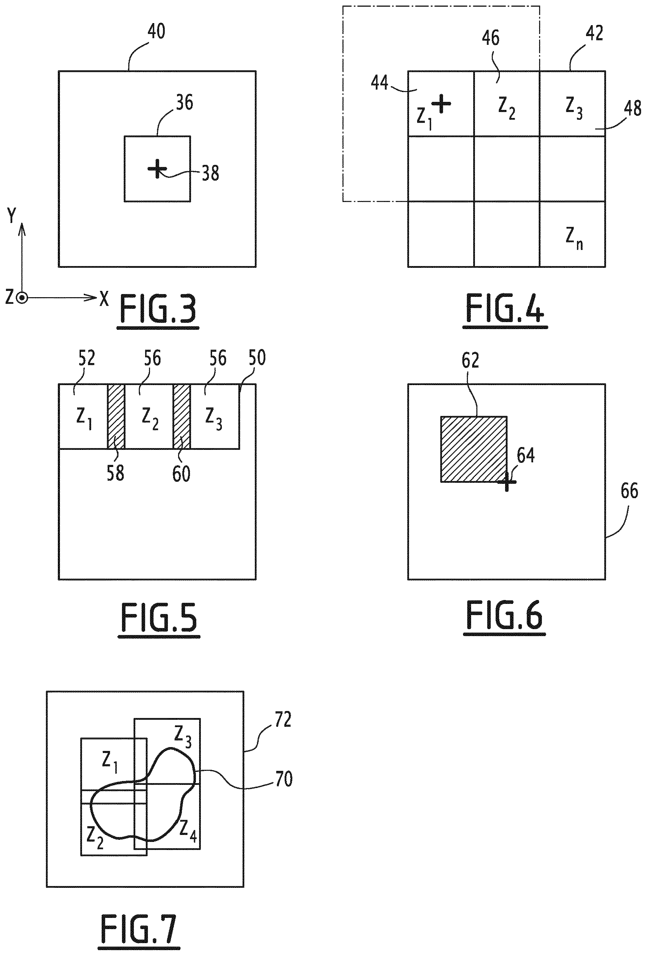

De plus, l'unité centrale 20 a des moyens 34, par exemple mis en œuvre par un module logiciel, de limitation ou de restriction, aptes à envoyer des commandes aux moyens 18 de déviation du faisceau laser de la tête galvanométrique 12 permettant de limiter le faisceau à une zone dite zone effective de frittage (par exemple zone référencée 36 sur la figure 3 décrite en détail ci-après), la zone effective de frittage étant située à l'intérieur de la zone maximale de frittage (40 sur la figure 3), qui peut être balayée par le faisceau laser lorsque la tête galvanométrique est dans une position donnée. En particulier, le déplacement du ou des miroirs est limité dans un intervalle de déplacement angulaire donné, par exemple de 6° à 7° d'amplitude maximum pour lesquels la réflexivité des miroirs est optimum. La zone effective de frittage est située à l'intérieur de la zone maximale de frittage, et est placée de préférence de manière à assurer une meilleure homogénéité de l'intensité réfléchie, de l'intensité d'irradiation électromagnétique et à réduire un éventuel effet d'ovalisation du faisceau laser interceptant le champ de frittage dans cette zone effective de frittage.

La figure 3 illustre, en vue de dessus du champ de frittage, un premier mode de réalisation dans lequel la zone effective de frittage 36 est une zone réduite centrée sur l'axe optique 38, point d'incidence perpendiculaire du faisceau 25 issu de la tête galvanométrique 12. Par exemple la surface 36 a des dimensions de l'ordre de 1/9 de la surface maximale de frittage 40 (à savoir un carré de 1/3 de côté du carré maximal).

Par exemple, si la zone effective de frittage est limitée à 100x100mm pour une distance de travail de 500mm, il a été constaté que la perte en réflexion se limite à 1,2% sur les bords de la zone effective de frittage. Dans le premier mode de réalisation avec une lentille 22 à champ plat de type f420, le diamètre du faisceau intercepté dans la zone effective de frittage varie entre 55 µm et 57 µm seulement, donc seulement une différence de 3,6%, par conséquent la variation de surface irradiée et donc la variation d'intensité d'irradiation électromagnétique est également limitée dans ce cas.

La figure 4 illustre l'obtention d'une zone globale de frittage 42 par addition de zones effectives de frittage Z₁, Z₂, Z₃...Zₙ adjacentes. Les zones effectives de frittage illustrées, notées respectivement 44, 46, 48, sont adjacentes et forment une portion de la zone globale de frittage. Chacune des zones effectives de frittage est obtenue par un positionnement de la tête de frittage grâce aux moyens de déplacement. Dans l'exemple de la figure 4, chaque zone effective de frittage est centrée sur l'axe optique associé à la position correspondante de la tête de frittage. Par exemple, la position de la tête galvanométrique associée à la zone effective 44 est illustrée en traits pointillés dans la figure 4.

Selon un deuxième mode de réalisation, illustré à la figure 5, il est envisagé de former une zone globale de frittage 50 à partir de zones effectives de frittage Z₁, Z₂, Z₃, notées respectivement 52, 54, 56 qui se chevauchent sur des portions respectives 58, 60, afin de faciliter la continuité d'interaction laser sur les bords entre deux zones effectives de frittage successives correspondant à deux positionnements de la tête galvanométrique, permettant ainsi de diminuer l'effet de marquage correspondant aux bords des zones dans une couche à fabriquer.

Selon un autre mode de réalisation, illustré à la figure 6, dans le cas où le dispositif de fabrication est réalisé selon le deuxième mode de réalisation décrit ci-dessus dans lequel il comporte un dispositif 24 dit « troisième axe » et non une lentille 22 à champ plat, il est avantageux de positionner la zone effective de frittage 62 décentrée par rapport à l'axe optique 64, tout en étant positionnée à l'intérieur de la zone maximale de frittage 66 correspondant à la position courante de la tête galvanométrique.

En effet ce décentrage est tel qu'il permet de maximiser le niveau de réflexivité des miroirs afin de réduire de façon maximum les variations de caractéristiques du faisceau laser. A titre d'exemple on nomme M1 le miroir 1 qui a un angle d'incidence avec le faisceau laser de a1 = 45° lorsque le faisceau se situe à la normale du plan de frittage, c'est-à-dire sur le repère 64 de la figure 6 et M2 le miroir 2 qui a un angle d'incidence avec le faisceau laser de **α2** = 38.5° lorsque le faisceau laser se situe à la normale du plan de frittage en repère 64 de la figure 6. Comme indiqué précédemment, l'amplitude optimum de chacun des miroirs est de l'ordre de 6° à 7°, idéalement l'angle de débattement de M1 se situe de 39° à 45° et de M2 de 31.2° à 38.2° ce qui positionne la zone de frittage décalée selon la figure 6.

Selon un mode de réalisation illustré à la figure 7, pour réaliser le traitement d'une section bidimensionnelle 70 d'un objet, il est également prévu de positionner la tête galvanométrique selon des positions successives correspondant aux zones qui se chevauchent, notées Z₁, Z₂, Z₃ et Z₄ afin de couvrir d'une manière adaptée la surface à fritter, sans couvrir la zone globale de frittage 72. Ainsi, dans ce mode de réalisation, les zones effectives de frittage et les positionnements de la tête galvanométrique associés sont réalisés en fonction de la section tridimensionnelle à traiter.

De manière analogue, si l'objet à fabriquer comporte plusieurs sections bidimensionnelles dans la couche en cours de traitement, la même stratégie de découpage en zones effectives et de positionnement de la tête galvanométrique s'applique pour chaque zone, sans balayer la zone globale de frittage atteignable, afin d'optimiser la fabrication de l'objet.

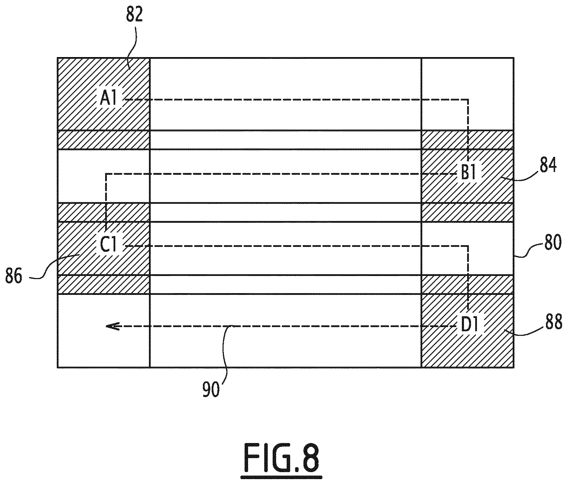

La figure 8 illustre en vue de dessus une zone globale de frittage 80 dans laquelle seulement quatre zones effectives de frittage 82, 84, 86 et 88 sont traitées. La tête galvanométrique est dans ce cas placée successivement dans quatre positions spatiales permettant de réaliser chacune des zones effectives de frittage. La flèche 90 illustre le déplacement de la tête galvanométrique. Selon cette variante de mise en œuvre, l'application du faisceau laser est effectuée de manière continue, y compris pendant le déplacement en translation de la tête galvanométrique, afin d'éviter un arrêt suivi d'un redémarrage ultérieur de la source de rayonnement électromagnétique.

Pour les diverses mise en œuvre explicitées ci-dessus, une section bidimensionnelle d'un objet à fabriquer est traitée couche par couche, et pour chaque couche, l'application du faisceau laser se fait selon plusieurs zones effectives de frittage, et un positionnement de la tête galvanométrique adapté pour chacune des zones effectives de frittage.

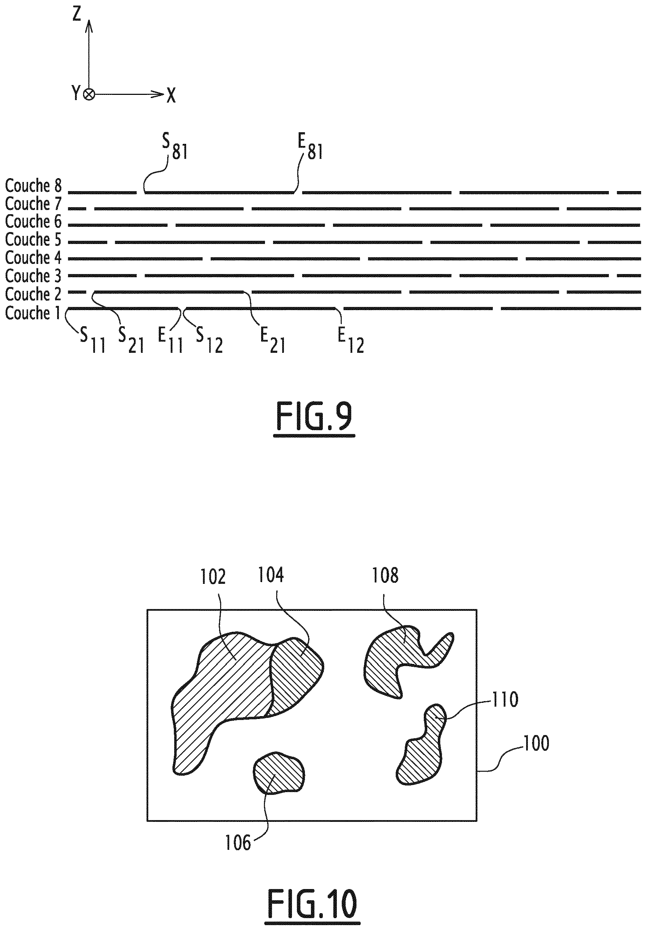

Selon un mode de réalisation, afin d'éviter que des éventuels effets de discontinuités entre zones effectives de frittage soient renforcés par le traitement en couches successives, il est proposé de décaler le positionnement des zones effectives de frittage entre deux couches successives, comme illustré à la figure 9.

La figure 9 illustre schématiquement, en coupe transversale, un exemple de positionnements des zones effectives de frittage sur plusieurs couches successives.

Dans cet exemple, cinq zones effectives de frittage sont considérées dans une couche, ces zones étant légèrement décalées. En coupe, chaque zone i de la couche j est délimitée par un point de départ de zone Sⱼᵢ et un point de fin de zone Eⱼᵢ. Sur la figure on a représenté quelques points de départ et de fin de zone notés respectivement S₁₁, E₁₁, S₁₂, E₁₂, S₂₁, E₂₁ et S₈₁, E₈₁. Dans ce mode de réalisation, les points de départ de zone, et par conséquent également les points de fin, sont décalés entre deux couches successives, comme par exemple les points S₁₁ et S₂₁ qui sont respectivement les points de départ de la première zone effective de la couche 1 et de la couche 2.

Il est à noter que l'espace entre le point de fin d'une zone effective et le point de départ d'une zone de frittage suivante sont décalés dans la représentation de la figure 9, mais peuvent en variante être confondus. Le décalage d'une couche à la suivante est également appliqué dans ce cas, afin d'éviter les effets de surface sur les frontières des zones effectives de frittage.

De manière analogue, le décalage de positionnement entre zones effectives de frittage entre deux couches successives s'applique également lorsque les zones effectives de frittage présentent un chevauchement.

Afin d'augmenter la productivité du dispositif de fabrication d'objet tridimensionnels par couche sans perte de qualité il est envisagé d'équiper le dispositif de plusieurs chaînes optiques de traitement, comportant chacune une source de rayonnement électromagnétique et une tête galvanométrique, permettant de diriger simultanément plusieurs faisceaux laser sur un champ de frittage.

La figure 10 illustre en vue de dessus un champ de frittage 100 comportant une zone 102 traitée par un premier faisceau laser provenant d'une première tête galvanométrique et des zones 104, 106, 108, 110, traitées par un deuxième faisceau laser provenant d'une deuxième tête galvanométrique. Dans cet exemple sont montrées plusieurs sections bidimensionnelles à traiter. Comme on peut le voir sur la figure, une section bidimensionnelle peut soit être traitée en entier par un faisceau laser provenant d'une seule des deux chaînes optiques de traitement, soit en partie par un premier faisceau laser provenant d'une première tête galvanométrique et en partie par un deuxième faisceau laser provenant d'une deuxième tête galvanométrique.

Dans le cas de l'utilisation de deux chaînes optiques de traitement, la zone globale de frittage peut être divisée en deux parties égales ou non, chaque partie étant attribuée à l'une des chaînes optiques de traitement. Pour chaque chaîne optique de traitement, on applique la division de la zone de frittage à couvrir en une pluralité de zones effectives de frittage et on détermine le positionnement associé de la tête galvanométrique, selon les diverses variantes décrites ci-dessus.

Les deux chaînes optiques de traitement étant indépendantes l'une de l'autre, tout paramétrage de positionnement de la tête galvanométrique et de la zone effective de frittage associée se fait de manière indépendante, optimisée par rapport à chaque couche de l'objet à fabriquer.

De préférence, la division en parties attribuée aux chaînes optiques de traitement est telle que les deux chaînes finissent le traitement d'une couche d'un objet à fabriquer en même temps. Ainsi, le temps de traitement et donc la productivité du dispositif de fabrication sont optimisés.

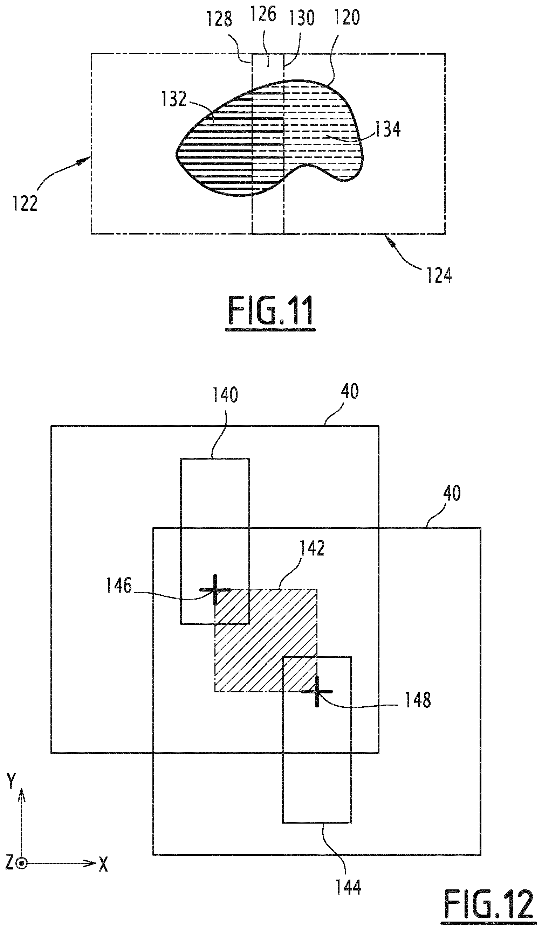

Lorsque deux chaînes optiques de traitement, chacune comportant une tête galvanométrique apte à diriger un faisceau laser sur le champ de frittage, sont utilisées, il est préconisé de traiter la zone de chevauchement de manière spécifique, comme illustré à la figure 11, afin d'éviter tout effet de frontière, et en particulier d'éviter un affaiblissement local des propriétés mécaniques ou métallurgiques de l'objet en cours de fabrication.

Comme déjà expliqué ci-dessus, pour une position donnée de la tête galvanométrique, le faisceau laser est dirigé selon une succession de trajectoires, par exemple des trajectoires rectilignes, parcourant la section bidimensionnelle de l'objet à fabriquer qui est située dans la zone effective de frittage, permettant ainsi la solidification progressive du matériau de la couche en cours de fabrication.

Sur la figure 11 est illustrée, en vue de dessus, une section bidimensionnelle 120 d'un objet à fabriquer, traitée par des faisceaux laser en provenance de deux têtes galvanométriques, une première tête galvanométrique A (non représentée) ayant une zone effective de frittage 122 et une deuxième tête galvanométrique B (non représentée) ayant une zone effective de frittage 124 associée. Les zones effectives 122 et 124 se chevauchent sur une zone de chevauchement 126, délimitée par un bord 128 de la zone effective de frittage 124 et un bord 130 de la zone effective de frittage 122.

La première tête galvanométrique est apte à tracer des trajectoires 132, qui sont des trajectoires rectilignes horizontales, définies chacune par deux points, un point appartenant au contour géométrique de la section bidimensionnelle à traiter et un point situé sur un des bords 128 ou 130 de la zone de chevauchement 126.

De manière analogue, la deuxième tête galvanométrique est apte à tracer des trajectoires 134, qui sont des trajectoires rectilignes horizontales, définies chacune par deux points, un point appartenant au contour géométrique de la section bidimensionnelle à traiter et un point situé sur un des bords 128 ou 130 de la zone de chevauchement 126.

De préférence, comme illustré sur la figure, les trajectoires sont entrelacées dans la zone de chevauchement 126, donc une trajectoire sur deux est appliquée par une même tête galvanométrique. Ainsi, par exemple, pour les trajectoires 132, une trajectoire sur deux a un point de fin sur le bord 128, la trajectoire suivante ayant un point de fin sur le bord 130. De manière analogue, les trajectoires 134 sont également tracées soit jusqu'au bord 128, soit jusqu'au bord 130. Lorsque le lasage est appliqué par deux têtes galvanométriques simultanément, l'ensemble de la section 120, y compris la zone de chevauchement, est réalisé en parallèle.

Il est à noter qu'un tel entrelacement des trajectoires dans la zone de chevauchement 126 est également réalisable lorsque les zones 122 et 124 sont deux zones effectives de frittage correspondant à deux positionnements différents de la tête galvanométrique d'une seule chaîne optique de traitement. Dans ce cas, il suffit de définir les trajectoires à appliquer dans chaque zone effective de frittage en fonction d'une stratégie d'entrelacement (par exemple une trajectoire sur deux, comme ci-dessus). Alors, lorsque la tête galvanométrique est positionnée dans une première position ayant la zone effective de frittage 122 comme zone de frittage associée, le faisceau laser est appliqué selon l'ensemble des trajectoires 132, et ensuite, lorsque la tête galvanométrique est positionnée dans une deuxième position ayant la zone effective de frittage 124 comme zone de frittage associée, le faisceau laser est appliqué selon l'ensemble des trajectoires 134.

Ainsi, le même résultat que ci-dessus est obtenu dans la zone de chevauchement, par un lasage appliqué en deux temps, et non sensiblement simultanément comme dans le cas de l'utilisation de deux chaînes optiques de traitement.

La figure 12 illustre une variante de mise en œuvre de l'invention avec deux chaînes optiques de traitement, adaptée lorsque la tête galvanométrique de chaque chaîne optique de traitement comporte un dispositif dit « troisième axe » pour lequel une zone effective de frittage décentrée est envisagée, sans pénaliser la qualité et l'homogénéité de traitement.

La figure 12 illustre une vue de dessus schématique dans laquelle une première tête galvanométrique 140 a une zone effective de frittage associée décentrée 142. La tête galvanométrique 144 a également comme zone effective de frittage associée la zone 142. Les axes optiques respectifs de chacune de têtes galvanométriques sont marqués par des croix 142 et 148 sur la figure. Ainsi, les deux têtes galvanométriques agissent sur une même zone effective de frittage et permettent le traitement simultané de la couche d'un objet dans cette zone de frittage 142. Ainsi, la productivité de fabrication est optimisée. Ce mode de réalisation avec un dispositif « troisième axe » permet d'optimiser la qualité du faisceau laser sur l'ensemble d'une zone de frittage donnée sur un seul et même objet.

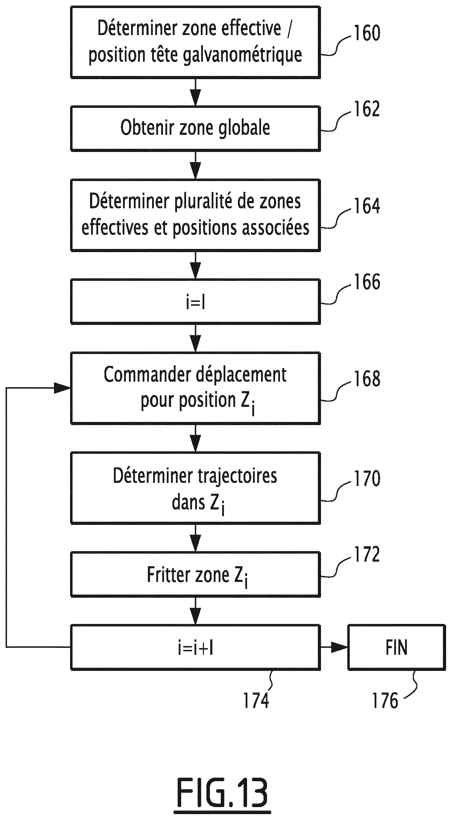

La figure 13 est un organigramme d'un procédé fabrication d'objets tridimensionnels par frittage laser couches par couches selon un mode de réalisation de l'invention.

Un tel procédé est mis en œuvre, dans le mode de réalisation préféré, par les moyens logiciels 32 et 34 de l'unité centrale 20, apte à commander une tête galvanométrique d'un dispositif de fabrication d'objets par frittage par couches.

Pour une couche courante d'un objet tridimensionnel à fabriquer par frittage laser, une première étape 160 du procédé consiste à déterminer une zone effective de frittage associée à une position donnée de la tête galvanométrique du dispositif. La détermination d'une zone effective consiste à déterminer ses dimensions et sa position par rapport à une zone maximale de frittage associée à un positionnement donné de la tête galvanométrique. Ainsi, connaissant la position de la tête galvanométrique il est possible d'en déduire la position de la zone effective de frittage associée dans le champ de frittage, et vice-versa, connaissant la position de la zone effective de frittage associée dans le champ de frittage il est possible d'en déduire la position associée de la tête galvanométrique.

Les diverses variantes décrites ci-dessus, en particulier le positionnement centré dans la zone de frittage maximale ou le positionnement décentré sont envisagées.

Selon une alternative, cette étape 160 est mise en œuvre une seule fois avant le traitement de l'ensemble des couches de l'objet à fabriquer, plutôt qu'une fois pour chaque couche à traiter.

Ensuite, une ou plusieurs zones à traiter, formant une zone globale de frittage sont obtenues à l'étape 162.

Selon une première variante, une zone globale de frittage est une zone rectangulaire ou carrée de taille prédéterminée.

Selon une deuxième variante, une zone globale de frittage est déterminée comme étant la section bidimensionnelle correspondant à la couche courante de l'objet à fabriquer.

Ensuite, l'étape 164 permet de déterminer une pluralité de zones effectives permettant de couvrir l'ensemble des zones à traiter de la zone globale de frittage. Les zones effectives de frittage ayant une taille fixe obtenue à l'étape 160, il s'agit dans l'étape 164 de déterminer une pluralité de positions spatiales de positionnement de chaque zone effective de frittage dans le champ de frittage afin d'obtenir une couverture de la zone globale de frittage, selon une stratégie de couverture. Comme expliqué ci-dessus, la couverture peut être effectuée par des zones effectives adjacentes ou des zones effectives présentant des chevauchements.

De plus, le positionnement de chaque zone effective peut, selon une variante illustrée ci-dessus à la figure 9, dépendre du positionnement des zones effectives dans une couche préalablement traitée, s'il en existe. Pour la mise en œuvre de cette variante il est utile de mémoriser les positions, par exemple du coin supérieur gauche, de chaque zone effective dans une couche traitée afin d'utiliser ces positions pour sélectionner les positions des zones effectives dans la couche suivante. Un décalage d'une valeur prédéterminée, qui peut être de l'ordre d'une demi-zone est alors appliqué.

Les zones de la pluralité de zones effectives de frittage permettant de couvrir la zone globale de frittage sont ordonnées selon un ordre choisi, par exemple un ordre de parcours du champ de frittage de gauche à droite et du haut vers le bas.

Chaque zone effective de frittage Zi a un positionnement de la tête galvanométrique Pi associé, comme expliqué ci-dessus en référence à l'étape 160.

Ensuite, un compteur i est initialisé à 1 à l'étape 166, le compteur étant destiné à désigner les zones effectives de frittage selon l'ordre choisi.

A l'étape 168, une commande de positionnement de la tête galvanométrique à la position Pi correspondant à la zone Zi. En pratique, comme expliqué en référence à la figure 2, des moyens de déplacement en translation de la tête galvanométrique sont mis en œuvre pour atteindre une position spatiale donnée.

Une étape 170 de détermination de trajectoires à effectuer par le faisceau laser dans la zone effective de frittage Zi, en fonction de la section bidimensionnelle de l'objet à fabriquer, est mise en œuvre. Il est à noter que la détermination des trajectoires pour chaque zone effective de frittage Zi peut également être effectuée au préalable, par exemple après l'étape 164.

Selon l'invention, dans l'étape 170 la définition des trajectoires prend en compte l'existence d'une zone de chevauchement entre deux zones successives, comme expliqué ci-dessus en référence à la figure 11, les trajectoires étant alors définies de manière à s'entrelacer entre elles dans la zone de chevauchement.

Le frittage effectif par application du faisceau laser par la tête galvanométrique selon les trajectoires définies dans la zone Zi à l'étape 172 est mis en œuvre. Les options de frittage, comme par exemple l'ordre de parcours des trajectoires et le point de départ de parcours d'une trajectoire, sont appliquées selon des méthodes connues.

Ensuite l'indice i est incrémenté de un et il est vérifié s'il reste une zone effective d'indice i à traiter à l'étape 174.

Dans le cas où il reste une zone effective à traiter, le procédé retourne à l'étape 168 de commande le déplacement de la tête galvanométrique. Selon les variantes de réalisation décrites ci-dessus, le frittage laser peut être continu ou pas pendant le déplacement en translation.

Dans le cas contraire, le procédé prend fin à l'étape 176.

En variante, le frittage laser s'effectue selon des trajectoires déterminées correspondant à plusieurs zones effectives de frittage, afin d'optimiser le temps de fabrication, comme expliqué ci-dessus en référence à la figure 8, ce qui induit un déplacement de la tête galvanométrique avant d'avoir fini l'ensemble des trajectoires définies pour une zone effective de frittage donnée.

Divers modes de réalisation ont été décrits ci-dessus, mais l'invention ne se limite pas à ces modes de réalisation et comporte des variantes à la portée de l'homme du métier. En particulier, ce qui vient d'être décrit ci-dessus avec deux chaînes optiques de traitement s'applique de manière équivalente avec un nombre quelconque de chaînes optiques de traitement, l'application n'étant nullement limitée à l'usage de deux chaînes optiques de traitement seulement.

## Revendications

1. Dispositif de fabrication d'objets tridimensionnels par couches superposées, apte à appliquer, pour chaque couche à fabriquer, un traitement par faisceau laser d'une couche d'un matériau pulvérulent ou liquide placé dans un champ de frittage, ledit dispositif comportant
- une tête galvanométrique (12) apte à piloter un faisceau laser vers chaque point d'une zone maximale de frittage dudit champ de frittage (14) lorsque ladite tête galvanométrique (12) est positionnée à une position prédéterminée, ladite tête galvanométrique (12) comportant des moyens (18) de déviation **du faisceau laser,**
- des moyens (30) de déplacement de ladite tête galvanométrique (12) dans un plan parallèle au plan dudit champ de frittage (14), permettant de positionner ladite tête galvanométrique (12) en au moins deux positions différentes, une zone effective de frittage étant associée à chaque position de ladite tête galvanométrique,
- une unité centrale (20) comportant :
- des moyens (34) de limitation aptes à envoyer des commandes aux moyens (18) de déviation du faisceau laser de la tête galvanométrique et aptes à limiter le pilotage du faisceau laser à une zone effective de frittage, située à l'intérieur de ladite zone maximale de frittage, et
- des moyens (32) de commande desdits moyens (30) de déplacement, aptes à commander le positionnement de ladite tête galvanométrique en une pluralité de positions de manière à couvrir une zone globale de frittage par une pluralité de zones effectives de frittage,
**caractérisé en ce que** :
lesdites zones effectives de frittage comportent des zones de chevauchement, les moyens (18) de déviation du faisceau laser sont pilotés par l'unité centrale (20) afin de tracer diverses trajectoires dans le champ de frittage (14),
des trajectoires de balayage effectuées dans deux zones effectives présentant une zone de chevauchement étant entrelacées dans ladite zone de chevauchement.

2. Dispositif selon la revendication 1, **caractérisé en ce qu'**une dite zone effective de frittage (36) est centrée dans ladite zone maximale de frittage (40), autour d'un point (38) correspondant à une incidence normale dudit faisceau laser sur le champ de frittage (14).

3. Dispositif selon la revendication 1, **caractérisé en ce qu'**il comporte en outre un dispositif (24) apte à focaliser ledit faisceau laser dans le champ de frittage (14) placé en amont des moyens (18) de déviation **du faisceau laser**, et **en ce que** ladite zone effective (62) de frittage est décentrée par rapport à ladite zone maximale de frittage (66).

4. Dispositif selon l'une quelconque des revendications 1 à 3, **caractérisé en ce que** ladite zone globale de frittage est une section tridimensionnelle (70) d'un objet tridimensionnel à fabriquer.

5. Procédé de fabrication d'objets tridimensionnels par couches superposées, comportant, pour chaque couche à fabriquer, une étape de traitement par faisceau laser d'une couche d'un matériau pulvérulent ou liquide placé dans un champ de frittage, mise en œuvre par un pilotage d'au moins un faisceau laser dans une zone maximale de frittage dudit champ de frittage par une tête galvanométrique positionnée à une position prédéterminée, ledit procédé comportant, pour le traitement d'une dite couche courante, les étapes suivantes :
- détermination (160) d'une zone effective de frittage associée à une position prédéterminée de ladite tête galvanométrique, ladite zone effective de frittage étant située à l'intérieur de ladite zone maximale de frittage ;
- obtention (162) d'au moins une zone globale de frittage ;
- détermination (164) d'une pluralité de zones effectives de frittage adaptées à couvrir ladite au moins une zone globale de frittage et d'une position de ladite tête galvanométrique associée à chaque zone effective de frittage ;
- commande (168) de déplacement de ladite tête galvanométrique vers au moins une position déterminée, et application d'un traitement par faisceau laser dans la zone effective de frittage associée à la position de la tête galvanométrique,
**caractérisé en ce que** :
au moins deux zones effectives de ladite pluralité de zones de frittage comportent une zone de chevauchement,
ledit procédé comportant en outre, pour chacune desdites zones effectives, une étape de détermination (170) de trajectoires de balayage par faisceau laser, les trajectoires effectuées dans deux zones effectives présentant une zone de chevauchement étant entrelacées dans ladite zone de chevauchement.

6. Procédé selon la revendication 5, **caractérisé en ce que** dans l'étape de détermination d'une pluralité de zones effectives de frittage, un positionnement de chaque zone effective de frittage prend en compte un positionnement de zones effectives de frittage déterminées pour une couche précédent ladite couche courante.

7. Installation de fabrication d'objets tridimensionnels par couches superposées **caractérisée en ce qu'**elle comporte au moins deux dispositifs de fabrication d'objets tridimensionnels par couches superposées conformes à l'une des revendications 1 à 4, lesdits dispositifs étant chacun apte à piloter un faisceau laser issu d'une source de rayonnement électromagnétique associée audit dispositif, vers un champ de frittage commun.

## Patentansprüche

1. Vorrichtung zum Herstellen von dreidimensionalen Objekten durch übereinanderliegende Schichten, die geeignet ist, für jede herzustellende Schicht eine Behandlung einer Schicht aus pulverförmigem oder flüssigem Material, das in einem Sinterfeld platziert ist, mit einem Laserbündel durchzuführen, wobei die Vorrichtung aufweist
- einen galvanometrischen Kopf (12), der geeignet ist, ein Laserbündel zu jedem Punkt einer maximalen Sinterzone des Sinterfeldes (14) zu steuern, wenn der galvanometrische Kopf (12) an einer vorbestimmten Position positioniert ist, wobei der galvanometrische Kopf (12) Mittel (18) zum Ablenken des Laserbündels aufweist,
- Mittel (30) zum Bewegen des galvanometrischen Kopfes (12) in einer Ebene parallel zur Ebene des Sinterfeldes (14), wodurch der galvanometrische Kopf (12) an mindestens zwei unterschiedliche Positionen positioniert werden kann, wobei eine effektive Sinterzone jeder Position des galvanometrischen Kopfes zugeordnet ist,
- eine Zentraleinheit (20), die aufweist:
- Begrenzungsmittel (34), die in der Lage sind, Befehle an die Mittel (18) zum Ablenken des Laserbündels des galvanometrischen Kopfes zu senden und in der Lage sind, das Steuern des Laserbündels auf eine effektive Sinterzone zu begrenzen, die im Inneren der maximalen Sinterzone liegt, und
- Mittel (32) zum Steuern der Bewegungsmittel (30), die geeignet sind, die Positionierung des galvanometrischen Kopfes zu einer Mehrzahl von Positionen zu steuern, derart, dass eine globale Sinterzone durch eine Mehrzahl von effektiven Sinterzonen bedeckt wird,
- **dadurch gekennzeichnet, dass**:
die effektiven Sinterzonen Überlappungszonen aufweisen, wobei die Mittel (18) zum Ablenken des Laserbündels von der Zentraleinheit (20) gesteuert werden, um verschiedene Bahnen in dem Sinterfeld (14) zu ziehen,
wobei Abtastungsbahnen, die in zwei, eine Überlappungszone aufweisenden effektiven Zonen ausgeführt werden, in der Überlappungszone verflochten sind.

2. Vorrichtung nach Anspruch 1, **dadurch gekennzeichnet, dass** eine sogenannte effektive Sinterzone (36) in der maximalen Sinterzone (40) um einen Punkt (38) zentriert ist, der einem senkrechten Einfall des Laserbündels auf das Sinterfeld (14) entspricht.

3. Vorrichtung nach Anspruch 1, **dadurch gekennzeichnet dass** sie außerdem eine Vorrichtung (24) umfasst, die in der Lage ist, das Laserbündel in dem Sinterfeld (14) zu fokussieren, und die stromaufwärts zu den Mitteln (18) zum Ablenken des Laserbündels liegt, und dass die effektive Sinterzone (62) in Bezug auf die maximale Sinterzone (66) dezentriert ist.

4. Vorrichtung nach einem beliebigen der Ansprüche 1 bis 3, **dadurch gekennzeichnet, dass** die globale Sinterzone ein zweidimensionaler Abschnitt (70) eines herzustellenden dreidimensionalen Objektes ist.

5. Verfahren zum Herstellen von dreidimensionalen Objekten durch übereinanderliegende Schichten, das für jede herzustellende Schicht einen Schritt der Behandlung einer Schicht aus pulverförmigem oder flüssigem Material, das in einem Sinterfeld platziert ist, mit einem Laserbündel aufweist, durchgeführt durch eine Steuerung mindestens eines Laserbündels in einer maximalen Sinterzone des Sinterfeldes durch einen galvanometrischen Kopf, der an einer vorbestimmten Position positioniert ist, wobei das Verfahren für die Behandlung einer sogenannten aktuellen Schicht die folgenden Schritte aufweist:
- Bestimmen (160) einer effektiven Sinterzone, die einer vorbestimmten Position des galvanometrischen Kopfes zugeordnet ist, wobei die effektive Sinterzone im Inneren der maximalen Sinterzone liegt;
- Erhalten (162) mindestens einer globalen Sinterzone;
- Bestimmen (164) einer Mehrzahl von effektiven Sinterzonen, die angepasst sind, die mindestens eine globale Sinterzone zu bedecken, und einer Position des galvanometrischen Kopfes, die jeder effektiven Sinterzone zugeordnet ist;
- Steuern (168) der Bewegung des galvanometrischen Kopfes zu mindestens einer festgelegten Position und Durchführen einer Behandlung mit einem Laserbündel in der effektiven Sinterzone, die der Position des galvanometrischen Kopfes zugeordnet ist,
**dadurch gekennzeichnet, dass**:
mindestens zwei effektive Zonen der Mehrzahl von Sinterzonen eine Überlappungszone umfassen,
wobei das Verfahren außerdem für jede der effektiven Zonen einen Schritt des Bestimmens (170) von Abtastbahnen durch das Laserbündel aufweist, wobei die in zwei, eine Überlappungszone aufweisenden effektiven Zonen ausgeführten Bahnen in der Überlappungszone verflochten sind.

6. Verfahren nach Anspruch 5, **dadurch gekennzeichnet, dass** bei dem Schritt des Bestimmens einer Mehrzahl von effektiven Sinterzone eine Positionierung jeder effektiven Sinterzone eine Positionierung von effektiven Sinterzonen in Betracht zieht, die für eine zu der aktuellen Schicht vorherige Schicht bestimmt wurden.

7. Anlage zum Herstellen von dreidimensionalen Objekten durch übereinanderliegende Schichten, **dadurch gekennzeichnet, dass** sie mindestens zwei Vorrichtungen zum Herstellen von dreidimensionalen Objekten durch übereinanderliegende Schichten nach einem der Ansprüche 1 bis 4 aufweist, wobei die Vorrichtungen jeweils geeignet sind, ein Laserbündel zu steuern, das von einer der Vorrichtung zugeordneten elektromagnetischen Strahlungsquelle zu einem gemeinsamen Sinterfeld ausgesandt wird.

## Claims

1. A device for the manufacture of three-dimensional objects using superimposed layers which is capable, for each layer that is to be manufactured, of applying a laser beam treatment to a layer of powdery or liquid material placed in a sintering field, said device comprising
- a galvanometric head (12) able to steer a laser beam toward each point of a maximum sintering zone of said sintering field (14) when said galvanometric head (12) is positioned at a predetermined position, said galvanometric head comprising deflecting means (18) for deflecting the laser beam,
- movement means (30) for moving said galvanometric head (12) into a plane parallel to the plane of said sintering field (14), making it possible to position said galvanometric head (12) in at least two different positions, an effective sintering zone being associated with each position of said galvanometric head,
- a central unit (20) comprising:
- limiting means (34) able to send commands to the galvanometric head deflecting means (18) for deflecting the laser beam and able to limit the steering of the laser beam to an effective sintering zone, situated inside said maximum sintering zone, and
- means (32) for controlling the movement means (30), adapted to control the positioning of said galvanometric head in a plurality of positions so as to cover a global sintering zone with a plurality of effective sintering zones,
**characterized in that**:
said effective sintering zones comprise overlap zones, the deflecting means (18) for deflecting the laser beam are piloted by the central unit (20) to trace various paths in the sintering field (14), the scanning paths done in two effective zones having an overlap zone being interlaced in said overlap zone.

2. The device according to claim 1, **characterized in that** one said effective sintering zone (36) is centered in said maximum sintering zone (40), around a point (38) corresponding to a normal incidence of said laser beam on the sintering field (14).

3. The device according to claim 1, **characterized in that** it further comprises a device (24) able to focus said laser beam in the sintering field (14) placed upstream from said deflecting means (18) for deflecting the laser beam, and **in that** said effective sintering zone (62) is off-centered relative to said maximum sintering zone (66).

4. The device according to any of claims 1 to 3, **characterized in that** said global sintering zone is a two-dimensional section (70) of a three dimensional object to be manufactured.

5. A method for the manufacture of three-dimensional objects using superimposed layers comprising, for each layer to be manufactured, a step for laser beam treatment of a layer of a powdery or liquid material placed in a sintering field, implemented by steering of at least one laser beam in a maximum sintering zone of said sintering field by a galvanometric head positioned at a predetermined position, said method comprising, for the treatment of one said current layer, the following steps:
- determining (160) an effective sintering zone associated with a predetermined position of said galvanometric head, said effective sintering zone being positioned inside said maximum sintering zone;
- obtaining (162) at least one global sintering zone;
- determining (164) a plurality of effective sintering zones suitable for covering said at least one global sintering zone and of a position of said galvanometric head associated with each effective sintering zone;
- controlling (168) the movement of said galvanometric head to at least one predetermined position, and applying a laser beam treatment in the effective sintering zone associated with the position of the galvanometric head,
**characterized in that**:
at least two effective zones from said plurality of sintering zones comprise an overlap zone, said method further comprising, for each of said effective zones, a step for determining (170) scanning paths by the laser beam, the paths done in two effective zones having an overlap zone being interlaced in said overlap zone.

6. The method according to claim 5, **characterized in that** in the step for determining a plurality of effective sintering zones, a positioning of each effective sintering zone takes into account a predetermined positioning of effective sintering zones for a layer preceding said current layer.

7. An installation for the manufacture of three-dimensional objects using superimposed layers, **characterized in that** it comprises at least two devices for the manufacture of three-dimensional objects using superimposed layers according to one of claims 1 to 4, said devices each being able to steer a laser beam coming from an electromagnetic radiation source associated with said device, toward a shared sintering field.
